# EUROPEAN PATENT APPLICATION

(11) **EP 0 603 688 A2**
(43) Date of publication of application: **29.06.1994**
(21) Application number: 93120023.2
(22) Date of filing: 11.12.1993
(51) Int. Cl.: H04N 1/00, H04N 9/31, H04N 5/44, H04N 5/74, H04N 5/72

(54) **Display system of multiprojection television images with electrics delay**

(30) Priority: 22.12.1992 IT TO921028
(71) Applicant: SELECO S.p.A., I-33170 Pordenone (IT)
(72) Inventor: Vindigni, Antonio, I-33170 Pordenone (IT); Dal Poz, Stefano, I-32014 Ponte nelle Alpi (IT)
(74) Representative: Dini, Roberto, Dr. Ing.

(57) **Abstract**

The present invention relates to a display system of television images by way of projection; the main characterising principle of the invention consists in the fact that a plurality of projectors are employed, each projecting the same image on the same screen, and that every single projector projects the image in a different instant.

## Description

The present invention relates to a display system of television images by way of projection.

It is known, with the increase in size and quality of television receivers, the typical defects of traditional television systems become more and more evident, for instance that of 625 lines, 50 fields per second, interlaced two by two (system commonly abbreviated as 625/50/2:1).

Defects such as interline twitter, large area flicker, line crawl result in being unacceptable in an improved quality television system; so as to improve or at least reduce such effects it is necessary to modify the traditional television scanning parameters (interlace ratio, number of lines per semi-field). In particular, for eliminating the interline twitter it results in being appropriate to adopt a progressive scanning (without interlacing); so as to make large area flicker invisible it is necessary to increase the semi-field frequency (for instance bringing it to 100 Hz); for minimising the line crawl it is necessary to increase the number of lines per field (also improving the vertical resolution).

However the necessity of assuring complete compatibility with the actual system and requirements by the transmitting companies for avoiding, as far as possible, modifications to the production and transmission plants in use, in fact they impose improved quality television systems (I.Q.T.V. Improved Quality TeleVision) in which the processing of the signal is carried out exclusively in reception.

These facts have given considerable impulses during recent years to studies on multidimensional interpolators and on scanning converters for television systems; in particular in this context the passage from the 625/50/2:1 standard to the 625/50/1:1 standard (P.S.U. Progressive Scan Up-Conversion) has been examined.

For obtaining a progressive scanning signal starting from the signal received of interlaced 2:1 scanning it is necessary to operate an interpolation able to supply the missing lines in the received signal, that are then "inserted" between the original lines, thus obtaining a signal with 625 lines per field (625x50=line frequency 31250 Hz).

Carrying out the interpolation, a more or less evident loss in the area of the image is noted in which a consistent movement is present; such loss results in being particularly visible in correspondence to the high spatial frequencies and is noted under the form of blurring. Such effect is due to two causes: the starting signal is not of a limited band inasmuch it is not usually pre-filtered; the movement of the images modify the spectrum of the signal.

In fact the spectrum of the image, in presence for example of purely transitory motion, has components of frequency all being contained in a plane oriented in the three-dimensional space in a dependent manner from the direction and intensity of the motion.

Furthermore the so-called artifacts are created, i.e. artificial structures not present in the original image.

A part of the aforementioned problems are also present in the case of systems with a greater number of lines, for instance systems of 1250 lines, 50 fields per second, interlaced two by two (system commonly abbreviated as 1250/50/2:1).

The defects and limitations of the television systems up to now indicated result in being naturally more evident on large screens, in particular in the case of projection systems on large screens.

The aim of the present invention is that of indicating display system of projected television images with improved characteristics of the image quality, obtained without the necessity of complicated electronic circuits.

For allowing such aims the present invention has as its subject a display system of television images by way of projection, characterised in the fact that a plurality of projectors are employed, each projecting the same image on the same screen, and that every single projector projects the image in a different instant.

Further aims and advantages of the present invention will result in being clear from the detailed description that follows and from the annexed drawings, supplied as a purely explanatory and non limiting example, wherein:
figure 1 schematically represents an image projection system according to the invention;
figure 2 schematically represents the original and interpolated points, on a portion of the raster projected by the system of figure 1.

The invention is based on the realisation of patterns of image presentation utilising a projection system in which it is possible to realise the optical convergence of numerous systems of RGB (red-green-blue) beams on a single screen so as to obtain, with appropriate electric delays, at the level of lines or fields, an image with improved optical characteristics from the point of view of the visual performance.

The starting point is represented by the aforementioned projection systems, utilising an equal number of machines, that realise the parallel convergence of the respective RGB beams, originating from a same input signal.

Such starting system allows, utilising N machines, having an identical deflection system (utilising in particular the same horizontal deflection frequency), so as to obtain a presentation that has the same characteristic parameters of the individual machines (respectively number of lines, semi-field frequency, scanning type for instance 1250/50/2:1), but with a brightness output power equal to N times that of a single machine (N=number of parallel machines).

Introducing appropriate electronic delay systems at the level of lines and/or fields, it is possible to supply the single machines one after the other with electric signals individually corresponding to:
a) interlaced systems: an elementary field with an individual delay, respect the reference field, equal to the field time (TF: 20ms) multiplied by i/N, with i=O..N-1, plus eventually an additional delay (offset) equal to a fraction of the original defection line, i.e. line time (TL: 32 ms) multiplied by i/N;
b) progressive systems: as above, but without line "offset". The cases a) and b) described above are mutually exclusive.

The resulting optical signal will have an electric characterisation or better scanned according to a raster:
case a): interlaced R.N/FR.N/2.N:1
   i.e. a raster with a number of lines equal to N times the lines of the source (R), field frequency equal to N times the field frequency of the source (FR), interlaced scanning 2xN to 1;
case b) progressive, with identical raster, the "progressive" meaning that, within the fields, the scanning is progressive;
   where:
   R=vertical definition (number of lines) of the source;
   N=source field frequency
   N=number of machines constituting the system.

In this way in output of the system a brightness power equal to N times that of the individual machine is obtained. The types of projectors that can be utilised are all those with which it is possible to realise an optical superimposition of numerous images, that is to say projectors of the frontal type and rear type with tubes, or employing light valves of the LCD type.

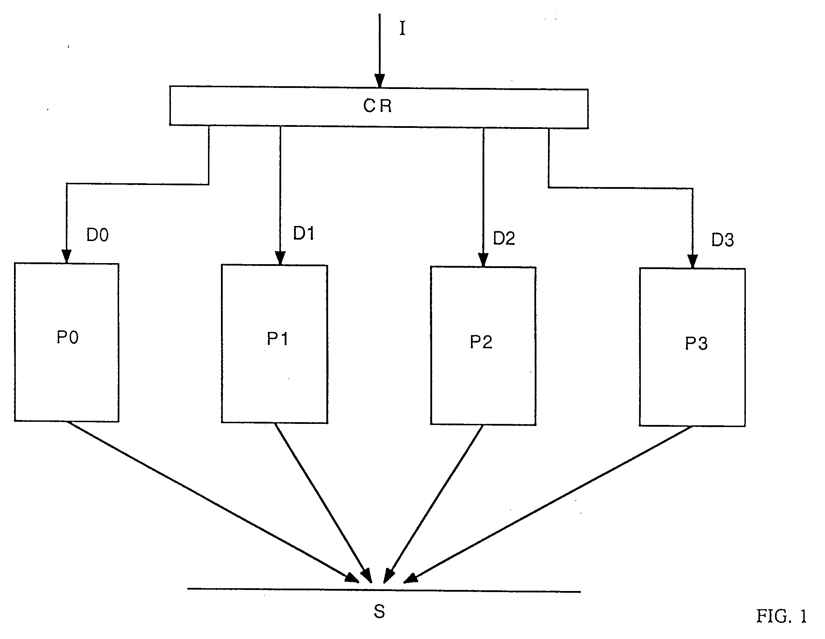

In figure 1, that indicates a preferred realisation of the invention, the reference tag I indicates the interlaced high definition input television signal 1250/50/2:1; the reference tag CR indicates a circuit that introduces appropriate electric delays, so as to produce in output four dephased signals, indicated in the figure respectively with the reference tags D0, D1, D2, D3.

The circuit CR, based on line and field memory circuits, today commonly used in many television receivers, allows to realise electric delays of the video signal under the form of digital samples.

In fact such signals are introduced in an elementary memory cell, equipped with an appropriate control system; such system, supplied by appropriate temporisation signals, stores the video information, previously brought back to a more convenient format, and it is then re-extracted, for the successive processing, after a determined delay of the general control signals of the system.

To each of the four signals D0, D1, D2, D4 a particular delay is imparted by the circuit CR, be it line (L) or field (F).

More in detail, in the described example, the delays are the following:
- D0:: L=0 ms; F=0 ms;
- D1:: L=8 ms; F=5 ms;
- D2:: L=16 ms; F=10;
- D3:: L=24 ms; F=15 ms.

In other words, each signal is delayed, respect the previous, by 1/4 of a semi-field plus 1/4 of line.

Each of the four delayed signals reach a projector; in the figure the four projectors are indicated respectively with the tags P0, P1, P2, P3; the four projectors are equal, and project on the same screen, indicated in the figure with the letter S.

The functioning of the described disposition is the following.

Thanks to the optical superimposition of four images, projected by four projectors, an optical signal equivalent to the type 5000/200/8:1 is obtained, i.e. a signal of 5000 lines, 200 fields per second, of the interlaced type 8:1.

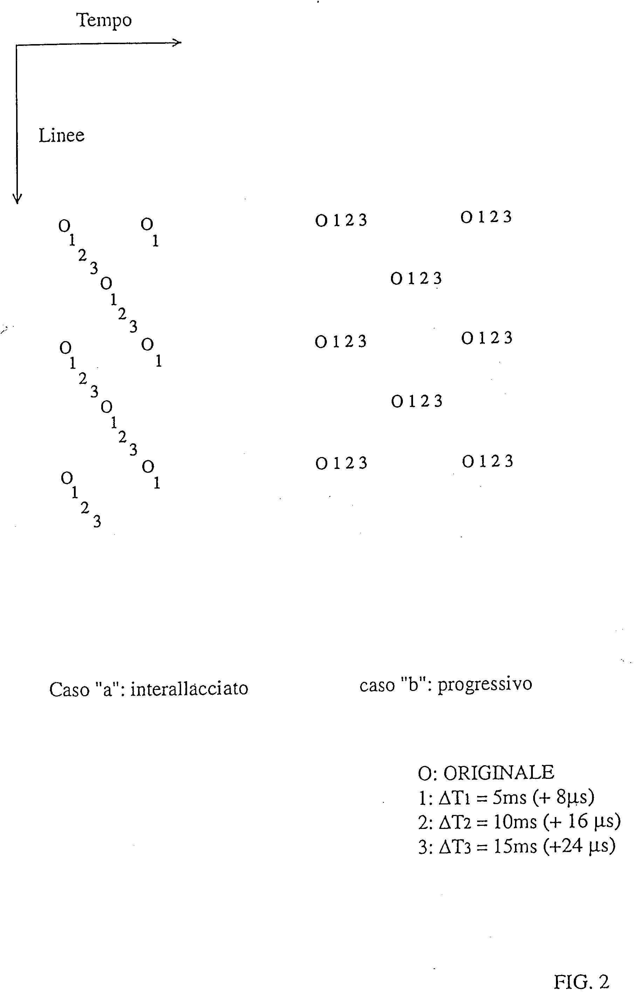

In systems of this type (of N projectors) the fact of employing apparatus of relatively low line frequency (32 KHz) has two advantages:
- the first, as it is not necessary to run the kinescope tubes at N.FL speed;
- secondly, as on the screen there are simultaneously N equally spaced electronic beams (see figure 2, that tries to explain to this situation).

In this sense the description of the raster N.R/N.FR/N.2:1 does not result in being completely correct or, at least, does not explain the exact situation.

Each of the systems, interlaced and progressive ("a" and "b" as above) have nominally, the same raster description, but, substantially, in the interlaced case the fill-in (the effect of the up-conversion) is added , to the sole field refreshment to a higher frequency.

It could be suggested, as a consequence, that the employment in the progressive case is useful in the case of projection onto a small screen, in which the visibility of the lines is more important; the interlaced case, on the other hand is more suited to screens having a larger surface area, with the consequent distance/diagonal ratio being inferior, in which the visibility of the lines could be a problem.

The characteristics of the described display system result in being clear from the description of the example.

From the given description the advantages of the system object of the present invention also result in being clear.

In particular they consist in the fact that:
- visual efficiency is obtained such as increased raster frequency, large area flicker is eliminated, apparent greater resolution;
- the machines work at a scanning frequency typical of the original image, lower and that can be easily obtained;
- the visual efficiency is obtained with an optical superimposition and not with complex electronic circuits having the overall efficiency reduced by the introduction of artifacts.

It is clear that the system described is more advantageous than those until now known; it is also clear that numerous variants are possible by the skilled man, to the system described as an example, without for this departing from the novelty principles inherent in the invention.

## Claims

1. Display system of television images by way of projection, characterised in that a plurality N of projectors (P0, P1, P2, P3) are employed, each projecting the same image on the same screen (S), and that every single projector projects the image in a different instant.

2. Display system of television images by way of projection, according to claim 1, characterised in that an electric delay circuit (CR) is provided that provides to impart to the signal sent to a single projector (Pi), respect the input signal of the system, of the interlaced type, a delay equal to i times a semi-field period (20 ms) divided by the number N of projectors, where i is the entire number that assumes the values comprised between 0 and N-1.

3. Display system of television images by way of projection, according to claim 2, characterised in that to the signal sent to each projector an additional delay is imparted equal to a fraction of the duration of a deflection line (32 ms).

4. Display system of television images by way of projection, according to claim 2, characterised in that said electric delay circuit (CR) comprises a system of elementary memory cells and a control system and allows the realisation of electric delays of video signals in the digital sample form, storing them and extracting them, for the successive elaborations, after a predetermined delay.

5. Display system of television images by way of projection, according to claim 1, characterised in that an electric delay circuit (CR) is provided that provides to impart to the signal sent to a single projector (Pj), respect the input signal of the system, of the progressive type, a delay equal to j times a deflection line (32 ms) divided by the number N of projectors, where j is a whole number that assumes the values comprised between 0 and N-1.

6. Display apparatus of television images by way of projection that utilises the system according to one or more of the previous claims.
